(19) Europäisches Patentamt
European Patent Office
Office européen des brevets

(11) **EP 4 733 772 A1**

(12) **EUROPEAN PATENT APPLICATION**

(43) Date of publication:
**29.04.2026 Bulletin 2026/18**

(21) Application number: **24209035.5**

(22) Date of filing: **25.10.2024**

(51) International Patent Classification (IPC):
*G01P 15/093* (2006.01)   *G01P 15/08* (2006.01)

(52) Cooperative Patent Classification (CPC):
**G01P 15/093;** G01P 2015/0854; G01P 2015/0857

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **CSEM Centre Suisse d'Electronique et de Microtechnique SA  - Recherche et Développement 2002 Neuchâtel (CH)**

(72) Inventors:
• **MANZOOR, Ayman**
  **2000 Neuchâtel (CH)**

• **EBRAHIMI ARGI, Farnaz**
  **8400 Winterthur (CH)**
• **HOOGERWERF, Arno**
  **2036 Cormondrèche (CH)**
• **BAYAT, Dara Zaman**
  **2000 Neuchâtel (CH)**
• **SATTARI, Hamed**
  **1030 Bussigny (CH)**
• **PETREMAND, Yves**
  **1400 Yverdon-les-Bains (CH)**
• **GHADIMI, Amir Hossein**
  **1022 Chavannes-près-Renens (CH)**
• **DESPONT, Michel**
  **1400 Cheseaux-Noréaz (CH)**

(74) Representative: **AWA Switzerland Case Postale 47 2800 Delémont (CH)**

(54) **HIGHLY DIRECTIONAL MEMS ACCELEROMETER**

(57)    The present invention is related to a MEMS-based accelerometer (1) comprising:
- a frame (2),
- a platform (3) forming an inertial mass M, and defining a platform plane XY,
- at least 10, preferably at least 20, more preferably at least 50, straight-shaped tethers (4) coupling said platform (3) to said frame (2),
- detection means to detect the displacement of the platform (3) with respect to the frame (2),
characterized in that the tethers (4) extend in at least two different directions along said platform plane XY.

FIG.3

EP 4 733 772 A1

**Description**

FIELD OF THE INVENTION

The present invention is related to a MEMS-based accelerometer primarily sensitive to vibrations in a single direction.

The present invention is also related to a method for manufacturing said MEMS-based accelerometer.

BACKGROUND OF THE INVENTION

MEMS (MicroElectroMechanical System)-based inertial sensors have been used quite effectively in various applications from consumer electronics to aerospace. However, they suffer from inherent limitations in applications requiring high bandwidth, excellent sensitivity and low noise performance, as well as high directionality all at once. This is extremely challenging as all these metrics are sensibly coupled, and improving one often leads to a deterioration of performance in the other metrics.

Many of the current limitations are due to the design of the resonator. The resonator is normally constituted of a deformable element, like a spring, and an inertial mass, also called test mass. This system converts the linear acceleration of the device into a mechanical displacement which can be measured through electrical or optical means.

The resonance frequency of the system, its thermal noise floor and its mode shape and mode spectrum largely determine the bandwidth, noise floor and directionality of an accelerometer respectively. Therefore, improving the design of the resonator has a direct impact on the performance of the accelerometer sensor.

In the prior art, the document WO 2013/131067 discloses an optomechanical accelerometer device comprising a rectangular test mass flexibly suspended on a frame via nano-tethers extending in one direction in the plane of the test mass. The nano-tethers have a high aspect ratio and are formed during the process with a high internal tensile stress to improve the noise performance while maintaining a large operation bandwidth.

This design allows to optimize the noise performance and the bandwidth but it is not optimized to develop a highly directional accelerometer.

SUMMARY OF THE INVENTION

The present invention aims to provide a MEMS-based accelerometer with a good bandwidth, a good noise performance and a high directionality with a resonator primarily sensitive to vibrations in a single direction. In the proposed arrangement, the primary mode is an out-of-plane translational motion, i.e. a vertical motion defined along the Z axis in a referential X, Y, Z.

In order to promote the out-of-plane translational motion and to reduce the translational motion in the plane X-Y, the tethers are according to the invention distributed around the inertial mass in at least two different directions. The arrangement of tethers in at least two different directions constrains the resonator mass in a way that substantially increases the stiffness of the in-plane translational modes making them well separated from the fundamental mode.

More specifically, the invention relates to a MEMS-based accelerometer comprising:

- a frame,

- a platform forming an inertial mass M, and defining a platform plane XY,

- at least 10, preferably at least 20, more preferably at least 50, straight-shaped tethers extending substantially along said platform plane XY and coupling said platform to said frame,

- detection means to detect the displacement of the platform with respect to the frame,

characterized in that said tethers extend in at least two different directions along the platform plane XY.

The large number of tethers, superior or equal to 10, allows to increase the stiffness of the platform for a good bandwidth whilst the distribution in at least two directions allows to limit the in-plane translational motion. The tethers extend outward from the platform in at least two different directions such as to constrain by tensile and/or compression forces along the direction of the tether's length any in-plane displacement of the platform.

Advantageously, the tethers may be distributed in spreading directions around the platform. Preferably, the spreading directions of the tethers are evenly distributed around the platform. Such distribution results in a more homogeneous 360° constrain of any possible direction of displacement along the platform plane and significantly contributes to constrain the in-plane rotational mode as well.

Also advantageously, the tethers may project out of the platform forming a substantially perpendicular angle with the platform edge. This contributes to reduce structural constrains at the connection point between the tethers and the platform which could result in fractures, and also contributes to constraining any in-plane platform motion.

Advantageously, the platform comprises at least one curved shape portion and tethers extend radially from said curved shape portion.

In addition, according to a preferred embodiment of the invention, the distribution of the inertial mass M in the platform is not uniform, with part of the mass concentrated in the centre of the platform to limit the rotational modes of the platform around the X, Y and Z axes. Localizing the mass closer to the axes of rotation reduces the associated moments of inertia and hence increases the associated eigenfrequencies of the rotational modes. The restriction of rotational modes further contributes to the directionality of the sensor.

Furthermore, in a preferred embodiment of the invention, the frame and the platform are not fully made of the same material as the tethers . The partial difference of material between the tethers, and the frame and platform induces high internal tensile stress during the manufacturing process allowing to improve the noise performance and bandwidth.

In a preferred embodiment of the invention, the tethers have a high aspect ratio (length divided by the thickness in any direction perpendicular to said length) of at least 50/1. The high aspect ratio is also good for noise performance but it is less advantageous for bandwidth since longer tethers are less stiff. This disadvantage can be compensated by adding a large number of them improving the bandwidth as aforementioned.

According to other preferred embodiments, the MEMS-based accelerometer has one or several of the following features:

- at least 65% of the inertial mass M of the platform is distributed within a central area of the platform plane XY corresponding to 50% of the total platform area in said platform plane XY;

- the gyration radius of the platform with respect to any axis passing through its center of inertial mass M is at least 10% smaller than the gyration radius of a similar platform having the same geometry but presenting a homogeneous mass distribution;

- the platform comprises a stack of layers with a main layer made out of a first material and an additional layer of a second material at the center of the platform, said second material having a density at least two times, preferably at least four times, higher than the density of the first material;

- the density of the second material is higher than 5 g/cm$^3$, preferably higher than 10 g/cm$^3$, said second material being preferably gold or a gold alloy;

- the platform comprises an apertured structure surrounding the center of the platform in order to increase the part of the inertial mass M concentrated at the center of the platform;

- the platform comprises two curved shape portions accommodating the tethers, said two curved shape portions being connected by other portions deprived of tethers, wherein the detection means are accommodated in at least one of said portions deprived of tethers;

- the detection means comprise waveguides fixed to the frame with said frame and waveguides extending in the direction of the platform in regions deprived of tethers;

- the tethers are intrinsically prestressed along their longitudinal direction with a tensile stress of at least 0.1 GPa, preferably at least 0.5 GPa;

- the tethers are made out of a single layer of SiN and wherein the frame and the platform are made out of multiple layers with at least one layer of SiN monolithically constructed with the single layer of SiN of the tethers;

- the ratio between any natural frequency of the MEMS-based accelerometer, other than the frequency of its fundamental mode, and the frequency of its fundamental mode is equal to or higher than 1.9.

The invention is also related to the method for manufacturing the MEMS-based accelerometer comprising the steps of :

- Providing an assembly with the frame, the platform and the at least 10, preferably at least 20, more preferably at least 50, straight-shaped tethers coupling said platform to said frame, with said tethers being distributed in two different directions around the platform;

- Local deposition of the second material at the center of the platform and/or material removal at the periphery of the platform leading to the non-uniform mass distribution of the platform with part of the inertial mass M concentrated at the center of the platform.

BRIEF DESCRIPTION OF THE FIGURES

Figures 1(a) and (b) represent different potential motions in translation along the Z axis and the X-Y axis respectively of the platform forming the resonator bloc, with respect to the frame of an embodiment of the MEMS-based accelerometer. Figure 1(c) represent different potential motions in rotation along the X, Y and Z axes of the platform with respect to the frame. According to an embodiment of the invention, the MEMS-based accelerometer is designed to promote the translational motions along the Z axis as represented in figure 1(a).

Figures 2 and 3 represent two different tridimensional views of the MEMS-based accelerometer according to two possible embodiments of the invention with a zoom on the tethers in figure 2.

Figure 4(a) represents a partial view of an embodiment of the MEMS accelerometer according to figure 3. Figure 4(b) represents a variant with another design of the platform.

Figure 5 represents an embodiment of the MEMS-based accelerometer according to the invention including the detection means.

Figure 6 schematically represents the steps of the method for manufacturing the MEMS-based accelerometer according to one embodiment.

DESCRIPTION OF THE INVENTION

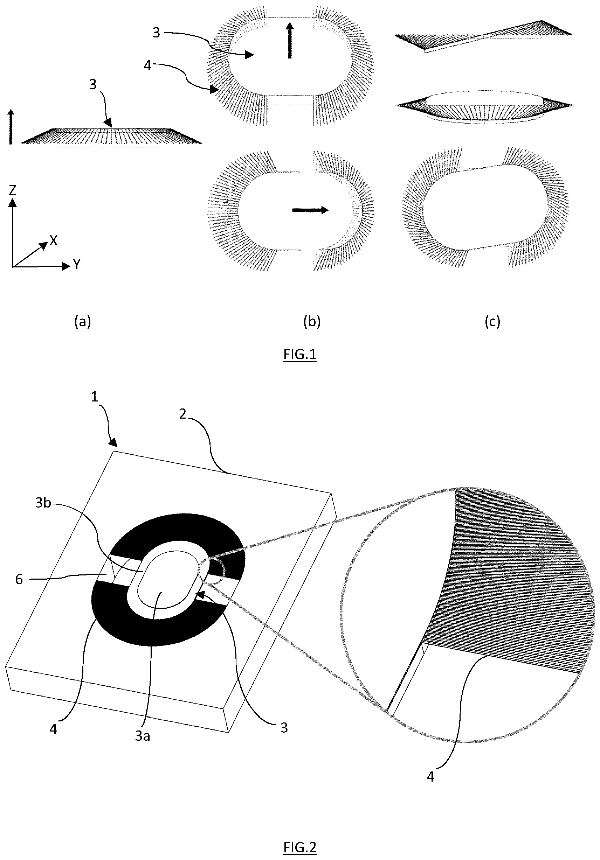

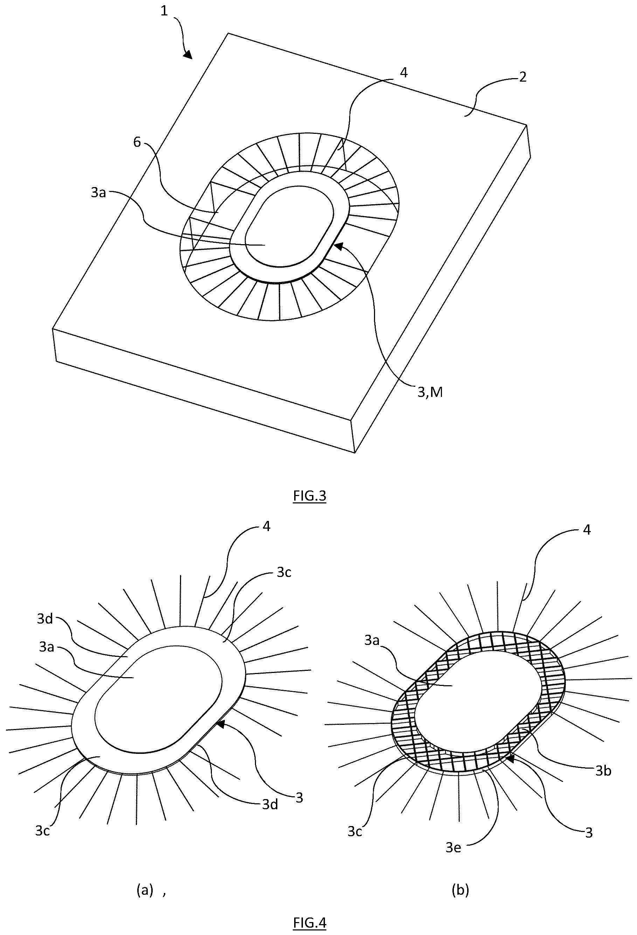

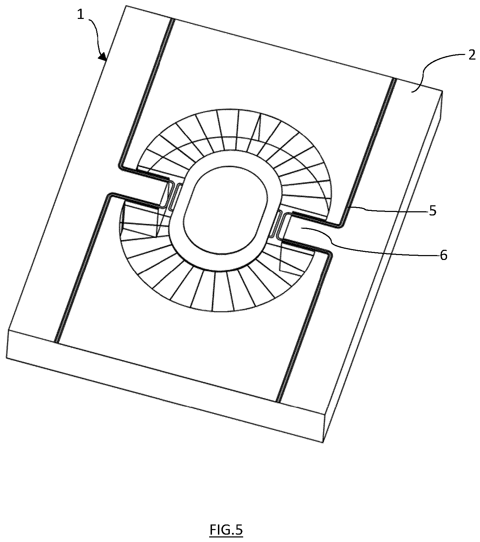

The present invention is related to a MEMS-based accelerometer primarily sensitive to motion / vibrations in a single direction. An embodiment of the MEMS-based accelerometer 1 as shown in figures 2 and 3 comprises a frame 2, a platform 3 forming the inertial mass M and tethers 4 distributed around the platform 3, coupling the frame 2 and the platform 3. It further comprises detection means 5 represented in figure 5. For this embodiment with a platform at least in part curved shape, the tethers are radially distributed around the platform.
The MEMS-based accelerometer is defined with a referential X-Y-Z with X-Y in the plane of the platform 3 and Z perpendicular to said plane (figure 1). According to the invention, the MEMS-based accelerometer is designed to be sensitive to out-of-plane accelerations, i.e. translational motion and/or vibrations along the Z axis as shown in figure 1(a), to reduce translational motion and/or vibrations in the X-Y plane as shown in figure 1(b) and preferably to reduce rotational motion and/or vibrations along the X, Y and Z axes as shown in figure 1(c).
To promote these out-of-plane vibrations, the tethers 4 are distributed around the platform 3 in at least two different directions in the X-Y plane. The tethers are straight-shaped in said plane. They can be uniformly distributed on the border of the platform or preferably they are concentrated in some portions of the border to leave regions 6 deprived of tethers for positioning the detection means 5 (figure 5). For example, the platform may be square shaped, rectangular shaped or at least in part curved shape with tethers extending in at least two directions that may be the X and Y directions in the X-Y plane of the platform. Preferably, the platform 3 is at least in part curved shape to accommodate radially the tethers. The curve of the edge of the platform 3 advantageously allows the tethers spreading in diverging directions while being connected with the platform forming always a straight angle with the platform edge. Preferably, the platform 3 comprises two curved shape portions 3c accommodating the tethers 4 with said two curved shape portions 3c being connected by other portions 3d deprived of tethers. Said other portions 3d may be of any shape (straight, curved).
The number of tethers is at least 10, preferably at least 20, more preferably at least 50 with a maximum that can be limited by size constrains and micro-fabrication capabilities. For example, the number of tethers in some embodiments may be as high as 1000.
Preferably, the platform has a non-uniform mass distribution with part of the inertial mass M concentrated at the center of the platform. To this end, in one variant shown in figure 4(a), an additional layer of material is present at the center 3a of the platform 3. This material has a density superior to the density of the main layer, i.e. the larger layer, constituting the platform without the additional layer. For example, the main layer may be a Si layer. Preferably, the density of the additional layer is at least twice superior to the density of the main layer. More preferably, it may be 3, 4, 5, 6, 7, 8 times superior to the density of the material of the main layer. Preferably, the additional layer is made out of a material having a density higher than 4 g/cm$^3$, more preferably higher than 10 g/cm$^3$ such as gold, or a gold alloy. The center 3a of the platform 3 comprising part of the concentrated inertial mass M may advantageously be at least partially curved-shaped. In particular a circular shape has the advantage of optimally concentrating the mass around a central point, which is the objective of the additional layer. Nevertheless, considering other size and shape constrains, the additional layer may be deposited in a central region 3a reproducing the shape of the platform 3 with reduced size, as in the example of figure 4(a). Typically for a gold layer, the layer has a thickness comprised between 5 and 20 $\mu$m for a main layer of Si having a thickness between 10 and 30 $\mu$m.

In another variant shown in figure 4(b), part of the material is removed at the periphery of the platform. The platform 3 comprises the center 3a full of material surrounded by a portion with an apertured structure 3b made out of the same material as the centre delimited by a continuous border 3e at least in the portions accommodating the tethers. According to this variant, the dimensions of the platform are adapted so as to keep the same inertial mass M as in the variant with the additional layer. Accordingly, the dimensions of the platform i.e. the thickness and/or width are increased to obtain the same inertial mass M.

Localizing the mass at the center of the platform allows reducing the radius of gyration which is a single distance measurement that expresses how far the mass is distributed away from a given axis of rotation. The radius of gyration can be calculated as the square root of the ratio between the moment of inertia (I) around a given axis and the mass of the body (M); i.e., the radius of gyration for a given axis corresponds to the radius of an imaginary ring having to the total mass of a body and the same moment of inertia around said given axis.

$$R_{gyr} = (\ I\ /\ M\ )^{1/2}$$

Compared to the platform without mass localization, the concentration of the mass at the center of the platform allows to decrease the radius of gyration associated with rotation around each of the 3 axes X,Y,Z of the platform by at least 10%, preferably by over 20%. For a given mass, the smaller the radius of gyration, the further the rotational mode's frequencies will be set apart from that of the fundamental translational mode.

Preferably, the ratio between the length and the thickness of the tethers is at least 50. By thickness, it is meant the size of the tether in any direction perpendicular to its length (width or height). Typically, the length of the tethers is comprised between 50 and 1000 $\mu$m, their height (along the Z axis) is comprised between 0,1 and 2 $\mu$m, whereas their width (in the X-Y plane) is comprised between 1 and 10 $\mu$m.

Preferably, the frame and the platform are not completely made of the same material as the tethers so as to induce an internal stress along the longitudinal direction of the tethers during the manufacturing process. Preferably, said internal stress is of at least 0.1 GPa, more preferably at least 0.5 GPa. The internal stress of the tethers can be calculated using physics simulations which take into account the properties of the multi-material device (young modulus, thermal expansion coefficients, geometry). Experimentally, the stress can be determined from the resulting natural frequencies of the accelerometer.

In one embodiment, the platform and the frame have a whole stack of materials, including the one the tethers are made out in order to maintain the tension in the tethers. Preferably, the tethers comprise a single layer of SiN and the frame and platform comprise a main layer of Si with a SiN layer monolithically constructed with the SiN layer of the tethers. More specifically, the platform and the frame comprise assembled layers of SiO$_2$, SiN and Si arranged in a sandwich structure. For example, the sandwich structure comprises :

- A Si layer with a thickness between 10 and 50 $\mu$m,

- A first layer of SiN with a thickness between 0.1 and 1 $\mu$m, preferably between 0.4 and 0.6 $\mu$m,

- A middle layer of SiO$_2$ with a thickness between 0.5 and 5 $\mu$m, preferably between 1.5 and 2.5 $\mu$m,

- A second layer of SiN with a thickness between 0.1 and 1 $\mu$m, preferably between 0.3 and 0.8 $\mu$m.

In a variant, the sandwich structure may comprise only one layer of SiN corresponding to the aforementioned second layer.

Preferably, the platform is rigid enough so that it does not bend significantly during operation. Rather than quantifying the rigidity itself or the dimensions of the platform, the resistance to bending has been characterized in terms of natural frequency of the bending mode, which can be accurately calculated using physics simulations. It requires a maximization of the absolute value of this mode's natural frequency and of the relative value with respect to the fundamental frequency, i.e. the frequency ratio for the bending mode. Preferably the ratio between the natural frequency of the bending modes and the frequency of the fundamental translation mode is superior to 7. It means that for a resonator with large fundamental frequency, for example 50 kHz, the bending modes have natural frequencies preferably above 350 kHz.

Some concrete examples of these figures for three specific embodiments (A, B and C) of the accelerometer are presented in the following table. The geometry of the accelerometers in these three embodiments is similar to the ones in figures 2 or 3; only the dimensions and number of tethers are adjusted to produce accelerometers adapted to different bandwidths. In all cases, a central region of the platform was provided with a layer of gold to obtain a higher concentration of mass near the center.

|  | Emb. A | Emb. B | Emb. C |
|---|---|---|---|
| Target bandwidth | 1 kHz | 10 kHz | 50 kHz |
| Platform footprint | $3.0 \times 2.4$ mm | $3.0 \times 2.4$ mm | $1.1 \times 0.8$ mm |
| Number of tethers | $2 \times 5$ | $2 \times 465$ | $2 \times 261$ |
| Tether length | 600 $\mu$m | 600 $\mu$m | 150 $\mu$m |
| Tether width | 2 $\mu$m | 2 $\mu$m | 2 $\mu$m |
| Tether thickness | 0.5 $\mu$m | 0.5 $\mu$m | 0.5 $\mu$m |
| Internal tensile stress | 730 MPa | 703 MPa | 746 MPa |
| Platform mass (including gold layer) | 292 $\mu$g | 258 $\mu$g | 27 $\mu$g |
| Gold area to platform area ratio | 53.8 % | 44.4 % | 12.5 % |
| Gold mass ratio to total | 66 % | 61.4 % | 30.1 % |
| Part of mass within central 50% area | 76% | 80% | 65% |
| Gyration radius (X axis) | 269 $\mu$m | 259 $\mu$m | 114 $\mu$m |
| Gyration radius without gold (X axis) | 319 $\mu$m | 319 $\mu$m | 134 $\mu$m |
| Gyration radius (Y axis) | 383 $\mu$m | 377 $\mu$m | 179 $\mu$m |
| Gyration radius without gold (Y axis) | 464 $\mu$m | 464 $\mu$m | 208 $\mu$m |
| Freq. fundamental mode | 1.03 kHz | 10.1 kHz | 50.2 kHz |
| Freq. rotational mode (X) | 2.5 kHz | 23.6 kHz | 99.3 kHz |
| Freq. rotational mode (Y) | 2.2 kHz | 24.1 kHz | 102 kHz |
| Freq. rotational mode (Z) | 9.77 kHz | 88.5 kHz | 416 kHz |
| Freq. translational mode (X) | 12.15 kHz | 135.5 kHz | 612 kHz |
| Freq. translational mode (Y) | 14.86 kHz | 136.5 kHz | 626 kHz |
| Freq. first bending mode | 71.7 kHz | 83.5 kHz | 396 kHz |
| Freq. fundamental mode in the absence of tensile stress | 18 Hz | 159 Hz | 3.33 kHz |
| Noise floor | 1.7 ng/Hz$^{1/2}$ | 5.6 ng/Hz$^{1/2}$ | 81 ng/Hz$^{1/2}$ |

In the table above, all size and mass parameters are determined by design. The gyration radius is calculated as explained above. The tensile stress modal frequencies, and noise floor are calculated using physics simulations of structural mechanics. The modal frequencies can also be verified experimentally with vibrometry measurements and in most cases show only small deviations (less than 5%) with respect to the simulations. A good coincidence between the experimental and predicted frequencies confirms the validity of the model and indirectly confirms the value of other calculated parameters such as the tensile stress, which cannot be directly measured.

The different accelerometers of the table above have been designed for specific target bandwidths. The bandwidth of the accelerometer is limited by the frequency of the first resonant mode. The accelerometers of these examples, not only respond to the bandwidth requirements, but also show an excellent thermal noise floor (below 100 ng/Hz$^{1/2}$) thanks to the high tensile stress of the tethers (above 0.7 GPa) and their high aspect ratio.

The good directionality of the accelerometers is reflected in the important ratio between the frequencies of the fundamental resonant mode (sensitive to translational motion along the Z axis) and all other modes (sensitive to other forms of displacement). In these examples, the closest modes are the rotational modes around the X and Y axis; with resonant frequencies which are at least 1.9 times superior or equal to the fundamental mode, i.e. roughly at least twice as large as the fundamental mode. This significant modal separation is achieved in part thanks to the concentration of mass in the center of the platform. Notice than in all cases, the central 50% of the area in the XY plane contains 65% or more of the platform mass.

Such concentration of the mass near the rotation axis results in a reduced gyration radius, at least 10% smaller than a homogeneously distributed mass with the same geometry for all three embodiments of the table. This results in a reduced inertial moment, and therefore in a higher resonant frequency of the rotational modes.

Although in all the examples the mass concentration was obtained by the first method (addition of a layer of high-density material in a central region), it is also possible to obtain such mass concentration by other methods, for example by removal of material from a peripheral area of the platform as already described.

Other translational modes (X, Y), the rotational mode around the Z axis and bending modes are much further apart from the fundamental mode, which indicates even lower sensitivity of the accelerometer to the corresponding motions.

The MEMS based-accelerometer comprises detection means 5 such as photonics detection means or capacitive means. Preferably it comprises photonics detection means with waveguides fixed to the frame 2 passing close to the platform 3 such as to induce evanescent-field losses, dependent on the distance between the waveguides and the inertial mass. Preferably, the frame 2 and the waveguides extend in the direction of the platform 3 in regions 6 deprived of tethers 4 (figure 5).

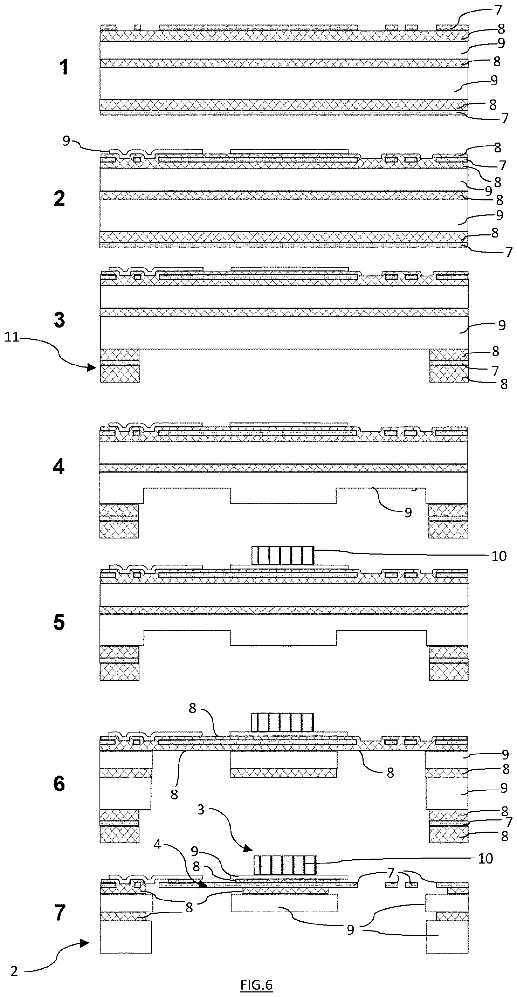

Figure 6 schematically represents the steps of the method for making the MEMS-based accelerometer with the additive approach, i.e. with an additional layer of gold at the center of the platform. Hereafter, the technologies for the deposition are given as examples. In step 1), a SOI (silicon on insulator) wafer is provided with a stack of Si 9 and $SiO_2$ 8 layers. On both sides, a layer of SiN 7 is deposited by LPCVD (Low pressure chemical vapor deposition). This layer 7 is then patterned on the top side to form the tethers and the openings for the waveguides. The patterning of the SiN layer 7 can be done by standard techniques comprising the application of a photoresist and subsequent etching. In step 2), a layer of $SiO_2$ 8 is deposited on the top side by PECVD (Plasma-Enhanced Chemical Vapor Deposition) and a layer of Si 9 is deposited by LPCVD on both sides. This layer 9 is patterned on the top side and etched on the back side. In step 3), a layer of $SiO_2$ 8 is deposited on the back side by PECVD. Then the layers of SiN 7 and $SiO_2$ 8 are partially patterned on the back to start forming the pillars 11 of the frame. In step 4), the Si layer 9 is patterned and partially etched from the back to further form the pillars 11 and start forming the platform. In step 5), a layer of Au 10 is electroplated on the top side at the level of the platform. Said electroplating process comprises the usual steps of surface preparation, seed layer deposition, masking, electrodeposition, and resist removal. In this case, the masking is performed such that the electrodeposition occurs only in a central area (3a) of the platform (3) to achieve the mass concentration at the centre. In step 6), the frame and the platform are further formed by etching partially the layers of Si 9 and the layer of $SiO_2$ 8 between the platform and the frame and the layer of Si 7 at the level of the platform. In step 7), the layers of $SiO_2$ 8 and SiN 7 are etched at the level of the pillars and the layer of $SiO_2$ 8 is etched on the top and back sides to obtain the frame 2, the platform 3 and the tethers 4.

In the alternative process with the subtractive approach, the step 5) can be omitted. In this case, in the steps 6 and 7 the etching of the Si layer 9 and $SiO_2$ layers 8 is patterned to produce a platform 3 presenting an apertured structure 3b surrounding its center 3a.

**Claims**

1.   A MEMS-based accelerometer (1) comprising:

   - a frame (2),
   - a platform (3) forming an inertial mass M, and defining a platform plane XY,
   - at least 10, preferably at least 20, more preferably at least 50, straight-shaped tethers (4) extending substantially along said platform plane XY and coupling said platform (3) to said frame (2),
   - detection means (5) to detect the displacement of the platform (3) with respect to the frame (2),

   **characterized in that** the tethers (4) extend in at least two different directions along said platform plane XY.

2.   A MEMS-based accelerometer (1) according to claim 1, wherein the tethers (4) spread in evenly distributed directions around the platform (3).

3.   A MEMS-based accelerometer (1) according to any of the previous claims, wherein the platform (3) has a non-uniform mass distribution with part of the inertial mass M concentrated at the center (3a) of the platform (3), said center (3a) of the platform (3) defining an area.

4.  A MEMS-based accelerometer (1) according to claim 3, wherein said area corresponds to 50% of the total platform area and wherein at least 65% of the inertial mass M of the platform (3) is distributed within said area.

5.  A MEMS-based accelerometer (1) according to claims 3 or 4, wherein the gyration radius of the platform (3) with respect to any axis passing through its center of inertial mass M is at least 10% smaller than the gyration radius of a similar platform having the same geometry but presenting a homogeneous mass distribution.

6.  A MEMS-based accelerometer (1) according to any of the claims 3 to 5, wherein the platform (3) comprises a stack of layers with a main layer made out of a first material and an additional layer of a second material at the center (3a) of the platform (3), said second material having a density at least two times, preferably at least four times, higher than the density of the first material.

7.  A MEMS-based accelerometer (1) according to claim 6, wherein the density of the second material is higher than 5 $g/cm^3$, preferably higher than 10 $g/cm^3$, said second material being preferably gold or a gold alloy.

8.  A MEMS-based accelerometer (1) according to any of the claims 3 to 7, wherein the platform (3) comprises an apertured structure (3b) surrounding the center (3a) of the platform (3) in order to increase the part of the inertial mass M concentrated at the center (3a) of the platform (3).

9.  A MEMS-based accelerometer (1) according to any of the previous claims, wherein the platform (3) comprises at least one curved shape portion (3c) accommodating the tethers (4).

10. A MEMS-based accelerometer (1) according to claim 9, wherein the platform (3) comprises two curved shape portions (3c) accommodating the tethers (4), said two curved shape portions (3c) being connected by other portions (3d) deprived of tethers (4), wherein the detection means (5) are accommodated in at least one of said portions (3d) deprived of tethers (4).

11. A MEMS-based accelerometer (1) according to claim 10, wherein the detection means (5) comprise waveguides fixed to the frame (2) with said frame (2) and waveguides extending in the direction of the other portions (3d) deprived of tethers (4).

12. A MEMS-based accelerometer (1) according to any of the previous claims, wherein the platform (3) and the frame (2) are only partially made out of the same material as the tethers (4).

13. A MEMS-based accelerometer (1) according to the claim 12, wherein the tethers (4) are intrinsically prestressed along their longitudinal direction with a tensile stress of at least 0.1 GPa, preferably at least 0.5 GPa.

14. A MEMS-based accelerometer (1) according to claims 12 or 13, wherein the tethers (4) are made out of a single layer of SiN (7) and wherein the frame (2) and the platform (3) are made out of multiple layers with at least one layer of SiN (7) monolithically constructed with the single layer of SiN (7) of the tethers (4).

15. A MEMS-based accelerometer (1) according to any of previous claims, wherein the ratio between any natural frequency of the MEMS-based accelerometer (1), other than the frequency of its fundamental mode, and the frequency of its fundamental mode is equal to or higher than 1.9.

16. A method for manufacturing the MEMS-based accelerometer (1) according to claims 3 to 8, comprising the steps of :

    - Providing an assembly with the frame (2), the platform (3) and the at least 10, preferably at least 20, more preferably at least 50, straight-shaped tethers (4) coupling said platform (3) to said frame (2), with said tethers (4) being distributed in at least two different directions around the platform (3);
    - Local deposition of the second material at the center (3a) of the platform (3) and/or material removal at the periphery of the platform (3) leading to the non-uniform mass distribution of the platform (3) with part of the inertial mass M concentrated at the center (3a) of the platform (3).

(a)                                        (b)                                        (c)

FIG.1

FIG.2

FIG.3

(a) ,

(b)

FIG.4

FIG.5

FIG.6

Europäisches
Patentamt

European
Patent Office

Office européen
des brevets

# EUROPEAN SEARCH REPORT

**Application Number**

EP 24 20 9035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/020590 A1 (PAINTER OSKAR [US] ET AL) 22 January 2015 (2015-01-22) | 1 | INV. G01P15/093 |
| Y | * paragraphs [0004], [0005], [0022], [0031], [0032], [0055]; figures 1-8 * | 1-16 | ADD. G01P15/08 |
| Y | HODGES TIMOTHY ET AL: "Characterization of Mass-Loaded Silicon Nitride On-Chip Resonators for Traceable Sensing of Low Amplitude Acceleration", 2022 IEEE INTERNATIONAL SYMPOSIUM ON INERTIAL SENSORS AND SYSTEMS (INERTIAL), IEEE, 8 May 2022 (2022-05-08), pages 1-4, XP034132414, DOI: 10.1109/INERTIAL53425.2022.9787524 [retrieved on 2022-06-08] * sections II and III * | 1-16 | |
| Y | US 2018/038890 A1 (DAHLEM MARCUS S [PT] ET AL) 8 February 2018 (2018-02-08) * paragraph [0039]; figures 1-5 * | 3 | |
| | | | TECHNICAL FIELDS SEARCHED (IPC) |
| A | DONG B ET AL: "An on-chip opto-mechanical accelerometer", MICRO ELECTRO MECHANICAL SYSTEMS (MEMS), 2013 IEEE 26TH INTERNATIONAL CONFERENCE ON, IEEE, 20 January 2013 (2013-01-20), pages 641-644, XP032339318, DOI: 10.1109/MEMSYS.2013.6474323 ISBN: 978-1-4673-5654-1 * the whole document * | 1-16 | G01P |

The present search report has been drawn up for all claims

| Place of search | Date of completion of the search | Examiner |
|---|---|---|
| Munich | 27 March 2025 | Schwarz, Cornelia |

EPO FORM 1503 03.82 (P04C01)

**EP 4 733 772 A1**

## ANNEX TO THE EUROPEAN SEARCH REPORT
## ON EUROPEAN PATENT APPLICATION NO.

EP 24 20 9035

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| US 2015020590 A1 | 22-01-2015 | US 2015020590 A1<br>WO 2013131067 A1 | 22-01-2015<br>06-09-2013 |
| US 2018038890 A1 | 08-02-2018 | NONE | |

EPO FORM P0459

For more details about this annex : see Official Journal of the European Patent Office, No. 12/82

14

REFERENCES CITED IN THE DESCRIPTION

**Patent documents cited in the description**

- WO 2013131067 A